# EUROPEAN PATENT APPLICATION

(11) **EP 2 849 027 A2**
(43) Date of publication of application: **18.03.2015**
(21) Application number: 14181198.4
(22) Date of filing: 15.08.2014
(51) Int. Cl.: G06F 3/01, G06F 3/16, G06F 3/03, G06Q 30/02, G06F 3/0488

(54) **Apparatus and method for display images**

(30) Priority: 17.09.2013 KR 20130112146
(71) Applicant: Samsung Electronics Co., Ltd, Gyeonggi-do 443-742 (KR)
(72) Inventor: Lee, Seung-hwan, Gyeonggi-do (KR); Moon, Pill-kyoung, Gyeonggi-do (KR); Yoon, Soo-yeoun, Seoul (KR); Cho, Bong-hyun, Gyeonggi-do (KR); Lee, Sang-joon, Chungcheongnam-do (KR); Lee, Jun-ho, Gyeonggi-do (KR)
(74) Representative: Brandon, Paul Laurence

(57) **Abstract**

An image display apparatus (100, 200, 300) and an image display method are provided. The image display apparatus includes a communicating interface (220, 350) configured to receive an identifier and service information associated with the identifier, a storage (240, 340) configured to store the identifier and the service information, a sensor (310, 330) configured to sense a gesture, a controller (320) configured to process service content corresponding to the identifier by using the service information in response to determining that the gesture corresponds to the identifier, and a display configured to display service content.

## Description

### BACKGROUND

### 1. Field

Apparatuses, devices, and methods consistent with exemplary embodiments relate to image display, and more specifically, to an image display apparatus configured to recognize specific gestures as one code and map the code with corporate identity (CI) of a company, for example, so as to be applied in advertising services, and an image display method thereof.

### 2. Description of the Related Art

Advancements have developed in the convergence of various different functions, as well as their complexity, provided and controlled by television (TV) display apparatuses. Additionally, the digitalization and advancement in the high definition of the display screen, has also developed in TV display apparatuses. Further, connecting TV display apparatuses with external digital home appliances that surrounded the TV display apparatuses has become diversified, and the types of signals transmitted and received among these devices has become diversified. Further, the TV display apparatus may be relied upon to be used as a device that can constitute and control home networking by connecting these digital home appliances and other devices that may control things such as lighting, gas, heating, and security equipment as well as the traditional home appliances.

A TV may be applied such that the TV operates as a broadcasting display device which displays grounded wave broadcasting received from antennas and cable broadcasting received through cables. Further, there are TVs that may perform requests that allow the TV to operate as a complex display apparatus that can display various formats of digitally inputted signals even when conditions provide for a digitalization of the connected related home appliances which may be moving, or transmitting, at a fast rate.

As the role of TV becomes more complex, the number of possible functions that could be performed by a wireless remote controller may increase which may be used for the operation of an associated TV, and the number of input keys that may be included in the wireless remote controller may greatly increase in order to distinguish between the increased number of functions and operations. Thus, users may feel inconvenienced when using the remote controller for controlling due to having a more complicated button input combination. Such complexity regarding functions of the remote controller may add further inconvenience children and/or seniors. Further, regarding the related remote controllers, users may be further inconvenienced in that they need to find the remote controller whenever watching TV, Another consideration that may provide further inconvenience also occurs as a battery that provides the electrical resource of the remote controller will need to be changed when it runs out.

Efforts have been made to address some of the inconveniences referred to above by using a camera module to provide a touch-free remote controller. By using the camera module to provide the touch-free remote controller, controlling a TV channel and volume can be performed, and selecting a photo and a video file as requested from the photo and the video folders stored in the storing medium of TV may be performed.

The touch-free method is used as an inputting device for a related art TV. Thus, a new method to provide different types of services from the inputting device by recognizing user gestures may be provided.

### SUMMARY

According to an aspect of an exemplary embodiment, there is provided an image display apparatus, including a communicating interface configured to receive an identifier and service information associated with the identifier, a storage configured to store the identifier and the service information, a sensor configured to sense a gesture, a controller configured to process service content corresponding to the identifier by using the service information in response to determining that the gesture corresponds to the identifier, and a display configured to display service content.

The identifier may include at least one of a text, a letter, a sign, a symbol, and a number.

The service information may include at least one of source connecting information that provides advertising related to the identifier, source connecting information that provides a coupon service related to the identifier, URL information that connects the identifier to contact information and a mail address.

The sensor may include an image sensor configured to photograph the gesture, and an image analyzer configured to recognize the gesture by analyzing the photographed gesture.

The identifier may be indicated on at least one of an advertising screen and a web page screen displayed on the display.

The storage may store a bookmark that relates to and arranges the identifier, and the controller may indicate the bookmark on the display according to a user command.

The controller may download an application configured to provide the bookmark from an external device and stores the application in the storage.

The sensor may include a touch panel configured to receive the gesture drawn by a user, and a gesture recognizer configured to recognize the gesture drawn on the touch panel.

The sensor may include an audio input configured to receive the gesture in an audio format, and an audio recognizer configured to recognize the gesture by analyzing the gesture in the audio format.

According to an aspect of another exemplary embodiment, there is provided a method for displaying an image display, the method including receiving an identifier and service information associated with the identifier, storing the identifier and the service information, sensing, using a sensor, a gesture, processing, using a controller, service content corresponding to the identifier by using the service information in response to determining that the gesture corresponds to the identifier, and displaying, on a display, the service content.

The identifier may include at least one of a text, a letter, a sign, a symbol, and a number.

The service information may include at least one of source connecting information that provides advertising related to the identifier, source connection information that provides a coupon service related with the identifier, URL information that connects the identifier to contact information and a mail address.

The sensing may include photographing the gesture, and recognizing the gesture by analyzing the photographed gesture.

The method may further include indicating the identifier on at least one of an advertising screen and a web page screen displayed on the display.

The storing may store a bookmark that relates to and arranges the identifier, and the processing may indicate the bookmark on a display according to a user command.

The processing may further include downloading an application configured to provide the bookmark from an external device and stores the application in the storage.

The sensing may include receiving the gesture drawn by a user through a touch panel, and recognizing the gesture drawn on the touch panel.

The sensing may include receiving the gesture in an audio format, and recognizing the gesture by analyzing the gesture in the audio format. image sensor

### BRIEF DESCRIPTION OF THE DRAWINGS

The above and/or other aspects will become more apparent and more readily appreciated from the following description of exemplary embodiments taken in conjunction with the accompanying drawings, in which:
FIG. 1 illustrates an image display system according to an exemplary embodiment;
FIG. 2 is a block diagram of an image display apparatus according to an exemplary embodiment;
FIG. 3 is a block diagram of an image display apparatus according to another exemplary embodiment;
FIGS. 4A and 4B are views provided to explain matching relationship between gestures and an identifier, for example, an identifier regarding a company, brand, product, etc., according to one or more exemplary embodiments;
FIG. 5A illustrates a screen showing an advertising screen;
FIG. 5B illustrates a screen showing a web page with advertisements;
FIG. 6 is a flowchart provided to explain an image display method according to an exemplary embodiment;
FIG. 7 is a flowchart provided to explain an image display method according to another exemplary embodiment;
FIG. 8 is a block diagram of an image display apparatus according to another exemplary embodiment; and
FIG. 9 is a flowchart provided to explain an image display method according to another exemplary embodiment.

### DETAILED DESCRIPTION OF EXEMPLARY EMBODIMENTS

Certain exemplary embodiments will now be described in greater detail with reference to the accompanying drawings. It is understood that, hereinafter, expressions such as "at least one of," when preceding a list of elements, modify the entire list of elements and do not modify the individual elements of the list.

In the following description, same drawing reference numerals are used for the same elements even in different drawings. The matters defined in the description, such as detailed construction and elements, are provided to assist in a comprehensive understanding. Accordingly, it is apparent that exemplary embodiments can be carried out without those specifically defined matters. Also, well-known functions or constructions are not described in detail because they may obscure with unnecessary detail.

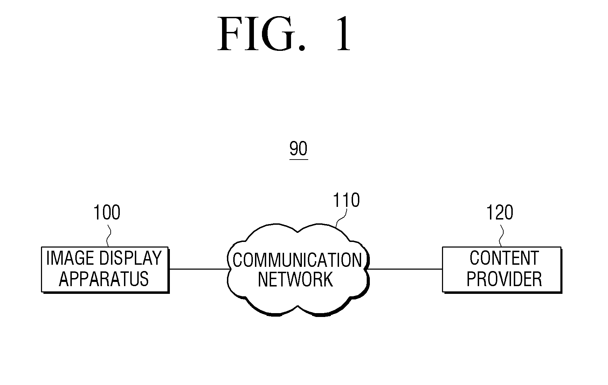

FIG. 1 illustrates an image display system according to an exemplary embodiment.

Referring to FIG. 1, the image display system 90 according to an exemplary embodiment includes an image display apparatus 100, a communication network 110, and a content provider 120.

According to another exemplary embodiment, the content provider may be provided within, or directly connected to, the image display apparatus. For example the content provider may be in the form of a digital disc or universal serial bus (USB) device provided to a user who may connect the device to the image display apparatus. Alternatively, the content provider may be, for example, an internal storage of the image display apparatus which stores content and provides it as a content provider.

The image display apparatus 100 may be a television (TV), a mobile phone, a tablet, a smartphone, a laptop, a personal computer (PC), a netbook, a digital multimedia broadcasting (DMB) device, etc. The image display apparatus 100 may recognize user gestures and receive services provided from the content provider 120 according to the recognition results. For example, data among video/audio/data included in broadcasting signals of digital television (DTV) may include motion recognition data configured to provide access detailed information related with items shown on a corresponding screen, i.e., gestures or link information. For example, when a user performs a corresponding gesture or combination of gestures, the image display apparatus 100 may display the detailed information by connecting using a uniform resource locator (URL) thereby including item-related detailed information. Herein the detailed information may be additional information, advertising, or shopping mall information.

According to an exemplary embodiment, targeted media, in the form of, for example, advertising may be provided when specific program start and/or end, and at the ending title of the advertising (or at any other point in the advertisement), a corporate identity may possibly be shown that corresponds to a specific company, product, product-line, event, offer, or information for public relations. For example, the ending title may expose a star shape representing and corresponding to a company, such as STARBUCKS. In this case, when a user then performs gestures associated with the corporate identify, in this case the star, the image display apparatus 100 may be provided directly with targeted media and/or services regarding Starbucks homepage, Starbucks provided advertising, or coupons issued, in recognition of the corresponding user gestures. Further, regarding specific product, the image display apparatus 100 may be provided with various services such as receiving additional information or accessing shopping malls or local stores which carry the specific product.

For the above process, the image display apparatus 100 may be provided with identifiers that can each represent (or characterize) a specific company, and may relate and store the identifiers with information regarding gestures. Further, the image display apparatus 100 may relate the identifiers (or gestures information) and additionally store the service information that can directly connect the specific targeted media such as, for example, advertisings, homepages or coupon issuing service. Herein, the identifiers may include signs, texts, or numbers, and represent information regarding companies or products. Thus, a user may easily recognize a specific company, and user motion may be a simple gestures or combination. Further, service information may include address information as uniform resource locator (URL).

Accordingly to a specific exemplary embodiment, a sign like a star may be inputted as gesture information regarding Starbucks. Alternatively, a text, "M," may be stored like the gestures information regarding Microsoft. Also, signs or texts may be stored as code information. For example, the text of "M," i.e., Microsoft corporate identity may be defined as code "01", and such information may be substantially processed. Further, a specific advertising, homepage, or a coupon issuing service connected with the identifier may be fixed or may be separate if the company requests separately. Further, such information may be also modified based on a certain period. For example, the image display apparatus 100 may store information regarding services that have been most recently provided. Specifically, when one advertisement regarding some company is provided before a specific program, service information regarding that advertisement may be stored. Further, when the company transmitted additional public relations (PR) advertising regarding corresponding the company which may be provided thereafter, the service information may be modified, for example if the PR advertising disclosed the addition of a company website the service information may be modified so as to connect the company homepage. Various methods regarding the above process may be performed; implementation cannot be limited to herein.

Further, according to an exemplary embodiment, bookmarks relating and indicating the corporate identity and gestures information, i.e., motion identity (M.I.) bookmark may be stored and forwarded. The image display apparatus 100 may display information about the corresponding bookmarks on the screen when a user requests. Additionally, the image display apparatus 100 may be provided with a MI bookmark by connecting to a specific website, and the relevant bookmark may be provided in application format.

The communication network 110 includes all of wire and wireless communication network. Herein, the wire communication network includes internet network such as cable network and public telephone network (PSTN), and the wireless communication network may include, for example, CDMA (code division multiple access), WCDMA (wideband Code Division Multiple Access), GSM (Groupe Special Mobile also known as Global System for Mobile Communications), EPC (evolved packet core), LTE (long term evolution), Wibro network, and any and the network versions corresponding to any of the releases provided by 3GPP (3rd Generation Partnership Project). Thus, if it is wire communication network, access point may connect a telephone exchange of a telephone service station. However, if it is wireless communication network, data may be processed by connecting SGSN (serving GPRS support node) or GGSN (gateway GPRS support node) managed by a communication company or by connecting various mediators such as BTS (base station transmission), NodeB, and e-NodeB.

Further, the communication network 110 may include a mini station (AP) such as femto or pico station built within buildings in many cases. Herein, the femto and pico stations are divided according to how many image display apparatuses 100 can connect at a maximum, based on classification of the mini stations. An AP may also include a nearfield communication module to perform nearfield communication such as Zigbee and Wi-Fi with the image display apparatus 100. According to an exemplary embodiment, the nearfield communication may be performed with various standards such as, e.g., Bluetooth, Zigbee, IrDA, RF (radio frequency) such as UHF (ultra high frequency), and VHF (very high frequency), and UWB (ultra wide band) as well as Wi-Fi. Accordingly, an AP may extract position information of data packets, may designate the best communication path regarding the extracted position, and may transmit the data packet according to the designated communication path to next apparatus, e.g., the image display apparatus 100.

The content provider 120 may be a device that is configured to provide the advertising service of specific company, and may include a server managed by the specific company, a device that may provide a coupon service by relating with the specific company, a device for providing MI bookmark, and a device for providing relationships between identifiers and gestures information in application format. For example, when the image display apparatus 100 requests a connection in order to receive specific advertising, such as a web page and coupon issuing service, the content provider 120 may provide a response and corresponding service according to the request.

Further, the content provider 120 may provide such data when the image display apparatus 100 requests data regarding MI bookmark, and provide a corresponding application when the image display apparatus 100 requests relevant information having an application format. For example, if the content provider 120 is a server managed by a specific company, identifier or service information may be provided to the image display apparatus 100 so as to be modified or renewed.

According to an exemplary embodiment, corporate PR activities may be benefited by encouraging active joining of users so that various services can be provided. As a result, the sales of specific product may increase. For example, an advertising service related with a brand may be provided by an inputted user gesture while viewing TV, i.e., through the consumer gesture joining method, and further, various types of methods diversified from the consumer joining may be performed.

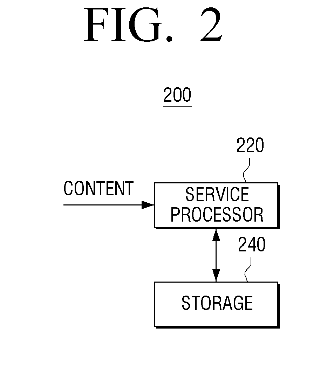

FIG. 2 is a block diagram of an image display apparatus according to an exemplary embodiment.

Referring to FIG. 2, the image display apparatus 200 according to an exemplary embodiment may include a service processor 220 and a storage 240. Herein, when a display is not included in the service processor 220, the display may be further included.

The service processor 220 may recognize gestures related with user motions, e.g., specific signs or texts, distinguish specific object corresponding to the recognized gestures, e.g., a corporate identifier or identity of a company, and receive content provided from corresponding services by connecting services matched with the distinguished corporate identity. The received content may be displayed on a screen.

As previously described by exemplifying STARBUCKS and MICROSOFT, STARBUCKS may be represented with the sign of the star, and MICROSOFT may be represented with the text of "M". In this case, corresponding sign and text may be stored as code information in the storage 240. In other words, when a user draws a star with his gestures, the service processor 220 may recognize the corresponding motion, and distinguish STARBUCKS from the information stored in the storage 240. Further, a service may be provided based on the code information of the corresponding company.

More specifically, the service processor 220 may distinguish corporate identity of a company with the code information through a process of analyzing the inputted images or recognizing the motion. Further, a service that a user requests may be provided through the service information related with the code information. Herein, recognizing gestures can be performed by analyzing the photographing images; however, when a user draws specific gestures on the screen of a touch panel constituting the display, recognizing specific gestures can be performed. An area where gestures are drawn may be only a part, parts, or a whole of the screen. In other words, gestures can be drawn on one area of the screen. Further, by using an infrared light pointer, gestures drawn on the touch panel can be recognized. Thus, the method of providing services by recognizing specific gestures can be modified into various formats, which are not limited to the above exemplary embodiments.

The storage 240 may relate and store gestures information regarding user gestures with identifiers. Further, the storage 240 may relate and store service information in order to provide corporate identities and content to users. For the above process, the storage 240 may include and use a plurality of databases (DBs), or, include and use two look-up tables. For example, when user gestures are recognized as "M" through the service processor 220, the identifier related with corresponding gestures information may be extracted or distinguished as code information. According to this embodiment "10" may be recognized as the corresponding code information, but is not limited thereto. Thereafter, the storage 240 may search service information from a different database (DB) or look-up table by using the code information of "10". Thus, the MICROSOFT web site represented by "M" may be accessed and advertising service or coupon issuing service may also be provided. Service information stored in the storage 240 may be fixed unless specific company requests changes, and also it may be frequently modified.

According to an exemplary embodiment, the image display apparatus 200 of FIG. 2 according to an exemplary embodiment may recognize gestures drawn on the touch panel instead of recognizing gestures simply with image photographing, and receives services which a user requests. The service processor 220 may implement parts or all of operations in algorithm format.

Although the above describes by referring to FIG. 2 and exemplifying that content is displayed on the screen, according to an exemplary embodiment, the service processor may include a voice processor or a voice outputter such as a speaker when content is provided to be a voice file such as music. Voices may be played with these units. Based on the above, the image display apparatus 200 according to an exemplary embodiment may be service processing device or content processing device.

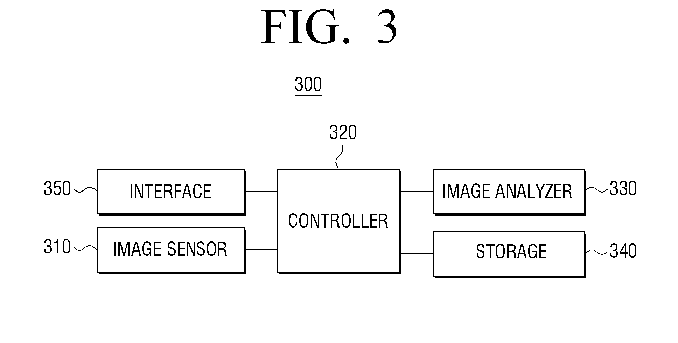

FIG. 3 is a block diagram of an image display apparatus according to another exemplary embodiment.

Referring to FIG. 3, the image display apparatus 300, according to another exemplary embodiment, may include parts or all of an interface 350, a image sensor 310, a controller 320, an image analyzer 330, and the storage 340, and may further include a gesture recognizer.

According to an exemplary embodiment, including parts such as an image sensor 310 and an image analyzer 330 may be omitted when the image display apparatus 300 includes a gesture recognizer, and one unit may be combined or unified into another unit. The following will be explained based on including all for the sake of understanding.

According to an exemplary embodiment, the image display apparatus 300 may include the gesture recognizer when the interface includes a touch panel for the display.

The interface 350 may include a communicating interface and a user interface, and the user interface may include a button input for the display. Herein, the communicating interface may include a communication module and receive services provided from the content provider 120 by connecting over the communication network 110 of FIG. 1. Using this process, the communicating interface may receive corresponding services by connecting with surrounding APs.

The button input may include buttons corresponding to functions such as a power button included in the image display apparatus 300 in order to operate the image display apparatus 300. Further, the display may displays various service screens. The display may arrange the touch panel on the interior or the exterior of the body. For example, when a user draws specific texts or signs on the surface of the touch panel, the controller 320 may provide corresponding information to the gesture recognizer so that gestures can be recognized.

The image sensor 310 provided on the interior or the exterior of the image display apparatus 300 may monitor and watch user gestures. Further, when specific gestures are performed by a user, photographing iamges may provide corresponding gestures that are provided to the image analyzer 330 under the control of the controller 320.

The controller 320 may perform controlling tasks for some of the parts or all of the interface 300, the image sensor 310, the image analyzer 330, and the storage 340 within the image display apparatus 300. For example, the controller 320 may provide the photographed images generated by the image sensor 310 to the image analyzer 330, and may provide the analysis results of the image analyzer 330 to the storage 340. Further, the controller 320 may control the interface 300 to connect specific services and receive content based on the service information that is searched, or extracted, from the storage 340.

According to another exemplary embodiment, the controller may provide the captured gesture image provided by the image sensor to an external device or server which does the gesture analysis and recognition. Further the external device or server may further determine and detected an associated identifier from a list of identifier and associated services stored in the external device or server. Then, the external device or server will provide the controller with the associated service that is associated with the gesture that was captured.

Further, according to an exemplary embodiment, when a specific company sends a request, the controller 320 may modify service information related with the company identifier in the storage 340, and may frequently modify service information based on the when product advertising or corporate PR advertising displayed on the screen is determined to indicate the above specific company. For example, the controller 320 may display the advertising provided from a broadcasting company on the screen. When the advertising corresponds to a company advertising supported by a user, the controller 320 may store service information regarding the corresponding advertising in the storage 340, and connect the corresponding advertising site when a user requests with gestures so that a user can be provided with services.

The image analyzer 330 may perform a function of analyzing photographed images provided from the image sensor 310. In other words, the images are provided by photographing user gestures, rather than a function of the image processor processing image content provided from a broadcasting company. The image analyzer 330 may output the analyzing results when a user gesture image is analyzed to see if the user gesture performed a gestures related with a company identifier such as "M". In this process, the analyzing results may be pattern information or bit information related with image patterns.

The storage 340 extracts service information, such as specific web site, advertising, or coupon issuing related to a company from the analyzed gestures information provided by the image analyzer 330. With this operation, a user may be provided with services which was requested. The storage 340 is properly described above with the storage 210 of FIG. 2, which will not be further explained.

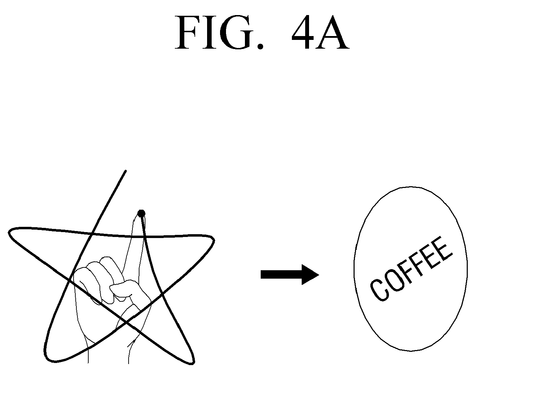

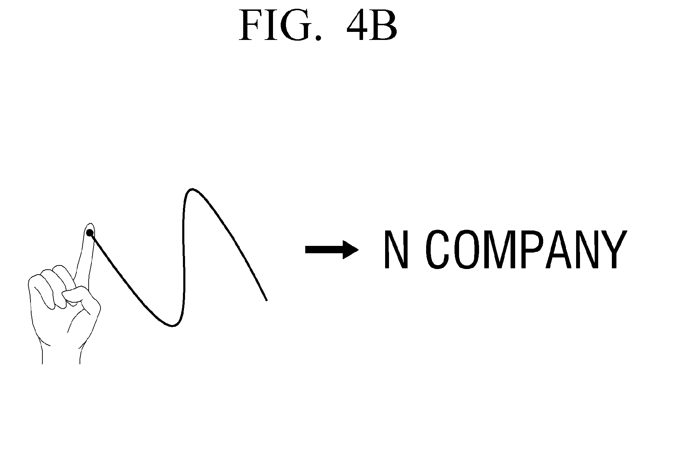

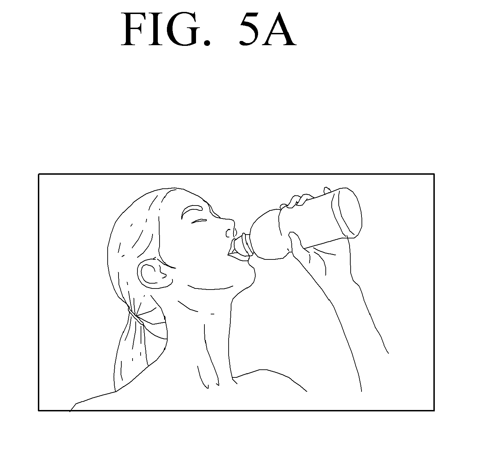

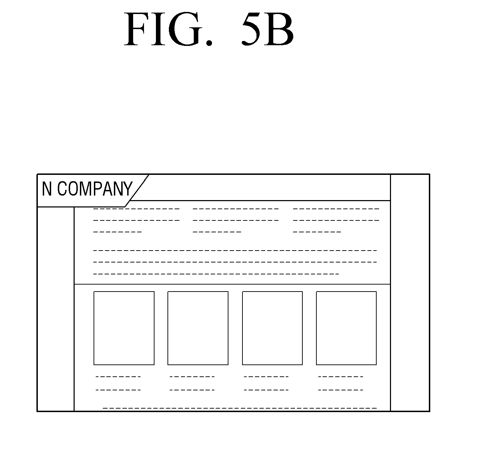

FIGS. 4A and 4B are views provided to explain matching relationship between gestures and a company corporate identity or identifier, and FIGS. 5A and 5B illustrate screens, specifically, one showing a moving advertising screen and another showing a web page.

Referring to FIGS. 4A and 4B with references to FIG. 1, when a user draws a star in front of the image display apparatus 100 or on the touch panel, the image display apparatus 100 may recognize that it is the corporate identity of, for example, Starbucks and provide services related with Starbucks.

According to another example, when a user draws an "N" that gesture may be recognized as being related with a specific brand of NEW BALANCE, and the image display apparatus 100 may then be provided with services such as a web site, advertising providing further details, or a coupon issuing saving on a product for a corresponding brand.

Such identifier, such as M, N, or some other text or shape may be marked on the ending title of advertisings provided from the image display apparatus 100 and thereby informed to a user, or published through specific search window when a program completes. Further, when connecting to a web site of a corresponding brand, the associated texts, such as M and N, may be published through the web page, or stored and provided within the product package when a product is viewed, selected, and/or bought. Further, the identifier may be provided to connect to a specific service site, and to aid in this process, the corresponding identifier may be provided in application format.

According to another exemplary embodiment, the identifier may be defined by a consumer or user of the desired product or company information. For example, a user may select a letter, number, symbol, or may create their own custom identifier which the user may associate with a gesture. As for defining the associated gesture for the custom identifier, the user may also selected what gesture the user wants associated with the identifier.

For example, if a user may select the letter 'B' as the identifier for STARBUCKS. The user may then also provide their desired gesture for the letter 'B' which may be their hand waving an index finger in the form of an upper case 'B' in their own handwriting and recorded by the sensor in the user's environment. Further a user may define a lower case letter 'b' as an identifier for a specific product offered by STARBUCKS such as, for example, a particular drink item offered on the menu. Similarly, the user may also provide a gesture to associate with the identifier selected which may be, for example, the user gesturing a drinking action.

Further, the user and/or company may define the services that are associated with newly defined user identifier and gesture. For example, a user may initially select a service where when the user gestures in a drinking motion, the identifier 'b' is identified, and a service may be executed that provides locations near the user that are currently open and serving the user's desired product. Further, the company that offers the product may associate other services with the identifier and other similar identifiers according to the user's preferences. For example, the company may update the 'B' identifier which corresponds to the overall company such that a service is provided to the user where any company news relating to new latte offering or improvements in the user's latte preferences is provided to the user when the user gestures the capital letter 'B' with their index finger. Further, the company may also update the identifier 'b' such that it is further associated with a service that provides a user with any special deals for the associated product or similar products.

Like in FIGS. 4A and 4B, when a user performs specific gestures, the image display apparatus 100 may connect an advertising site and a specific web site according to the recognition results of the gestures, and may provide an advertising screen or web site related screen as illustrated in FIGS. 5A and 5B to a user.

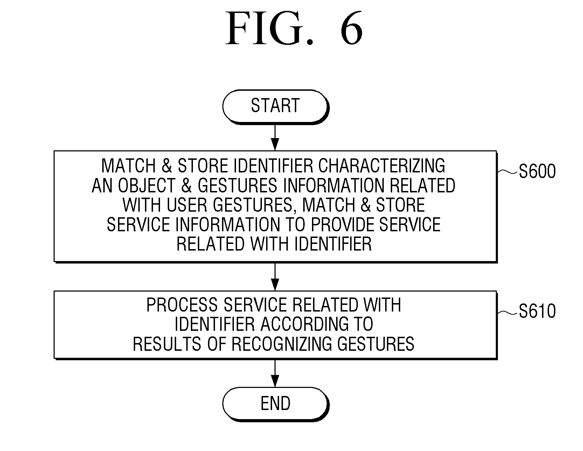

FIG. 6 is a flowchart provided to explain an image display method according to an exemplary embodiment.

Referring to FIG. 6 with reference to elements of FIG. 1, the image display apparatus 100 according to an exemplary embodiment may match and store an identifier that characterizes object and gestures information related with user gestures and may match and store service information to provide services related with the identifier, at operation S600. Herein, a plurality of the stored information may be modified by a regular time period.

The above described identifier, gestures information, and service information may become binary and stored in two databases (DBs) or two look-up tables. In other words, the gestures information may be stored as specific patterns of images or various bit information, matched and stored with the identifier. At this point in a process, the specific pattern may be in an image form, and the bit information corresponds to binary information.

For example, when a user draws a gesture in the form of an "M", the image display apparatus 100 may extract the identifier by using corresponding recognized pattern from the first DB or look-up table when the characterized pattern of M is recognized through image analyzing. The identifier may be stored as code information, e.g., "10". The image display apparatus 100 may extract the service information matched with the identifier from the second DB or look-up table by using the code information. The processes of extracting the service information may be understood as processes of building the recognition results regarding gestures.

The image display apparatus 100 may receive advertising, web services, and coupon services by using the extracted service information, i.e., by using the recognition results regarding gestures, at operation S610. For example, when advertising regarding a specific product of a company is stored as service information, corresponding advertising may be provided. When service information to provide public relations (PR) advertising for a specific company is stored, connecting the homepage of the company may be provided according to the recognition results regarding user gestures.

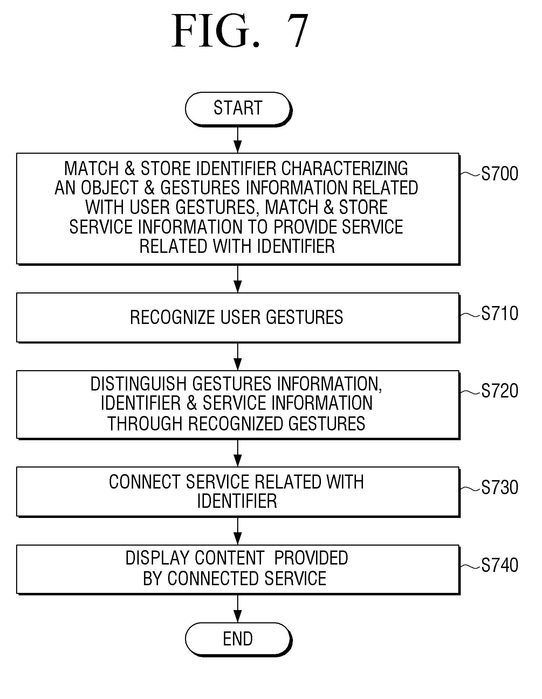

FIG. 7 is a flowchart provided to explain the image display method according to another exemplary embodiment.

Referring to FIG. 7 with reference to elements of FIG. 1, the image display apparatus 100 according to an exemplary embodiment matches and stores an identifier that is characterizing some object and gestures information related with user gestures, and may also match and store service information to provide services related with the identifier, at operation S700. The relevant explanation of operation S600 above may be referred to for additional description of operation S700, and therefore further detail will not be further explained for the sake of brevity.

At operation S710, the image display apparatus 100 performs an operation to recognize user gestures. The operation to recognize user gestures may be performed by analyzing photographed images in which user gestures are photographed; or, for example, recognizing gestures may be performed by recognizing the motion line touched on the screen like the touch panel.

Further, according to another exemplary embodiment, a piezoelectric sensor may be placed within a device which may track the movements made by a user holding the device. The device may then transmit the gesture path information to the display apparatus for analysis. Specifically, for example, the wireless remote controller may contain a piezoelectric sensor allowing the user to hold and wave the remote controller to form a certain gesture, the detail of which can then be transmitted to the display device for analysis.

At operation S720, the image display apparatus 100 distinguishes the gestures information, the identifier and the service information through the recognized gestures. The information may be distinguished by extracting the identifier through the gestures information such as pattern information in image format or the bit information, and extracting the service information from the extracted identifier. The relevant explanation is referred to the above description, and this will not be further explained.

The image display apparatus 100 connects to a corresponding service based on the extracted service information, at operation S730, and displays the content provided from the connected service on the screen, at operation S740. The content displayed on the screen may be advertising images, web site information regarding the homepage of specific company, or receiving coupons.

The image display apparatus 100 according to an exemplary embodiment may display motion on predefined area when a user connects to the internet through the image display apparatus 100 and may perform web surfing or shopping, link URL connected with corresponding motion when a user performs motion, i.e., gestures, and display additional information. Within this process, the image display apparatus 100 and the content provider 120 or a broadcasting company may establish a promised agreement regarding gestures and URL links.

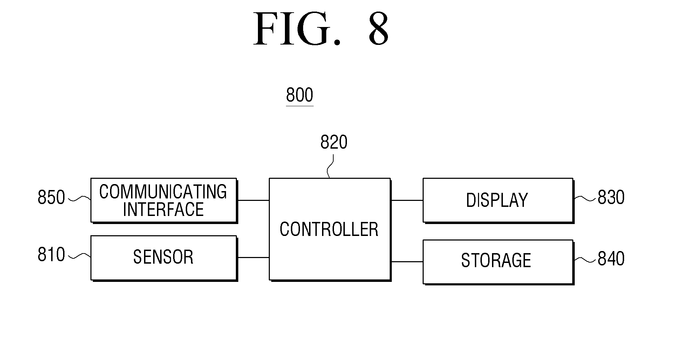

FIG. 8 is a block diagram of the image display apparatus according to another exemplary embodiment.

Referring to FIG. 8, the image display apparatus 800 according to another exemplary embodiment may include some parts or all of the parts, specifically, a communicating interface 850, a sensor 810, a controller 820, a display 830 and a storage 840.

Including some parts or all the parts may be possible in accordance with one or more exemplary embodiments such as, in an exemplary embodiment the display 830 may be excluded. For understanding, the following exemplary embodiments will be explained and includes all of the parts shown in FIG. 8.

The communicating interface 800 may receive specific objects, e.g., the identifier of a company and the service information from a content provider, such as the content provider 120 as shown in FIG. 1. Herein, the identifier may include texts, signs, or numbers which may specifiy a company or a specific product of the company that can be characterized, and the service information may include advertising content related with the specific company or product, and may include, for example, a web service, coupon issuing, voice call automatic connecting, URL information, and e-mail connecting information.

The sensor 810 senses user gestures. For this process, the sensor 810 may include an image sensor configured to photograph user gestures, and the image analyzer to analyze the photographed images and recognize gestures. Further, the sensor 810 may include a touch panel configured to receive inputted movements related with user gestures, and the gesture recognizer to recognize the inputted gestures in the touch panel. The sensor 810 may also include a voice input to input information regarding user gestures in voices, and the voice recognizer to recognize the gestures by analyzing the voices. Herein, the voice input includes a microphone. When the identifier or specific company is spoken regarding voices, or when specific CM song is sung regarding advertising, the inputted voices may be analyzed and corresponding service may be directly connected. The sensor 810 may be a piezoelectric sensor configured to track movements of a device and provide the vector movement information to the gesture recognizer for analysis and recognition of the inputted gesture.

The controller 820 may control overall operation of the communicating interface 800, the sensor 810, the display 830, and the storage 840 constituted within the image display apparatus 100. A related and relevant explanation of elements may be found by referring to the above description provided for FIG. 3.

Further, the display 830 may display the content provided by connecting to services with the controller 820. For example, the advertising screen may be displayed again, or the site screen related with the coupon issuing service may be displayed. Further, the display 830 may indicate the bookmark stored in the storage 840 according to a user request. Herein, the bookmark may be understood as concept of the electronic book which the identifier of specific company is matched with some objects, i.e., information regarding a company or a product.

The storage 840 may store the identifier and the service information. When gestures are recognized by the sensor 810, the controller 820 may compare the recognition results with the stored identifier, or corporate identities, in the storage 840, and processes the services by using the service information matched with the identifier corresponding to the compared results.

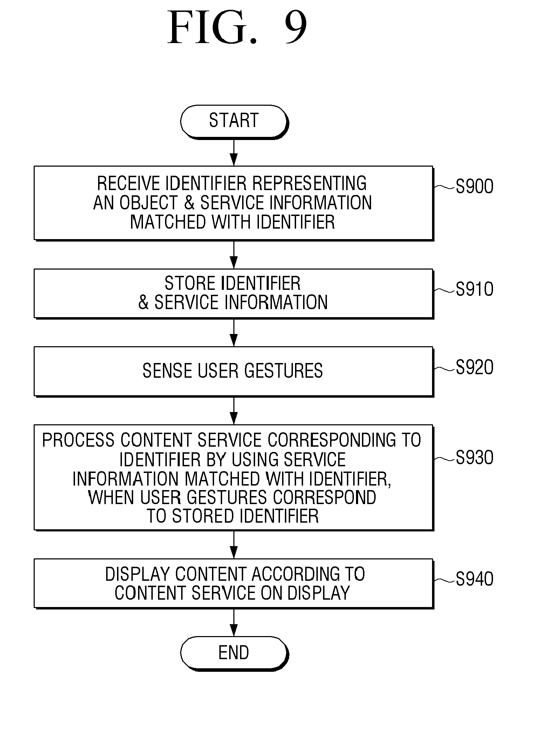

FIG. 9 is a flowchart provided to explain the image display method according to another exemplary embodiment.

Referring to FIG. 9 with reference to some elements from FIGS. 1 and 8 for convenient explanation, the image display apparatus 100 according to another exemplary embodiment receives the identifier representing an object, and the service information matched with the identifier, at operation S900. Such identifier and service information may be received by connecting the server which a specific company manages.

Further, the image display apparatus 100 may store the identifier and service information within an internal memory, at operation S910. Herein, the identifier may correspond to texts, numbers, or video or audio signs that can represent the specific company or a product, which may be stored in image pattern and/or code information formats.

The image display apparatus 100 may sense user gestures, at operation S920. For explanation about gestures sensed in various methods, reference is made to the above description provided by referring to FIG. 8, and this will not be further described for the sake of brevity.

When user gestures correspond to the identifier stored in a memory, the image display apparatus 100 may process content service corresponding to the identifier by using the matched service information with the identifier, at operation S930. Herein, processing services includes connecting corresponding web site based on the service information, e.g., URL information.

At operation S940, the image display apparatus 100 displays the content provided according to the content service on the screen. If a voice file is implemented as content, the operation S940 may include playing back the content instead of displaying the content. Thus, the operation S940 may be modified in various manners.

While the above-described exemplary embodiments are with reference to a display apparatus, it is understood that one or more other exemplary embodiments are not limited thereto and may be implemented with reference to an image processing device that processes an image and outputs the same to an external display. For example, the image processing device may be an audio/video receiver, a set-top box, a Blu-ray player, a digital versatile disc (DVD) player, a media streaming device, a gaming system, a media server, etc.

Although it is described that elements of exemplary embodiments are integrated into one or combined to operate, exemplary embodiments are not limited thereto. Thus, within the scope of exemplary embodiments, at least one of elements can be selectively combined to operate. Further, elements may be implemented to be independent hardware; however, parts or all of the elements may be selectively combined and implemented to be computer program including program modules that can perform parts or all of the functions combined in one or a plurality of hardware. Codes and code segments constituting the computer program may be easily inferred by the skilled in the art. Such computer program may be stored in non-transitory computer readable medium that can be read by a computer, read and operated by a computer, which implements an exemplary embodiment.

The non-transitory computer readable recording medium refers to a medium which stores data semi-permanently and can be read by devices, rather than a medium that stores data temporarily such as register, cache, or memory. Specifically, the above various applications or programs may be stored and provided in non-transitory computer readable recording medium such as CD, DVD, hard disk, Blu-ray disk, USB, memory card, or ROM. Moreover, it is understood that one or more of the above-described elements may be implemented by at least one processor, circuitry, etc.

Further, the foregoing exemplary embodiments and advantages are merely exemplary and are not to be construed as limiting the exemplary embodiments. The present teaching can be readily applied to other types of apparatuses. Also, the description of exemplary embodiments is intended to be illustrative, and not to limit the scope of the claims.

## Claims

1. An image display apparatus (100, 200 300), comprising:
a communicating interface (220, 350) configured to receive an identifier and service information associated with the identifier;
a storage (240, 340) configured to store the identifier and the service information;
a sensor (310, 330) configured to sense a gesture
a controller (320) configured to process service content corresponding to the identifier by using the service information in response to determining that the gesture or audio input corresponds to the identifier; and
a display configured to display service content.

2. The image display apparatus (100, 200, 300) of claim 1, wherein the identifier comprises at least one of a text, a sign, and a number.

3. The image display apparatus (100, 200, 300) of claim 1, wherein the service information comprises at least one of source connecting information that provides advertising related to the identifier, source connecting information that provides a coupon service related with the identifier, URL information that connects the identifier to contact information and a mail address.

4. The image display apparatus (100, 200, 300) of claim 1, wherein the sensor 310, 330) comprises:
an image sensor (310) configured to photograph the gesture; and
an image analyzer (330) configured to recognize the gesture by analyzing the photographed gesture.

5. The image display apparatus (100, 200, 300) of claim 1,
wherein the storage (240, 340) stores a bookmark that relates to and arranges the identifier, and
wherein the controller (320) indicates the bookmark on the display according to a user command.

6. The image display apparatus (100, 200, 300) of claim 6, wherein the sensor (310, 330) comprises:
a touch panel configured to receive the gesture drawn by a user; and
a gesture recognizer configured to recognize the gesture drawn on the touch panel.

7. The image display apparatus (100, 200, 300) of claim 1, wherein the sensor (310, 330) comprises:
an audio input configured to receive the gesture in an audio format; and
an audio recognizer configured to recognize the gesture by analyzing the gesture in the audio format.

8. A method for displaying an image, the method comprising:
receiving an identifier and service information associated iwth the identifier;
storing the identifier and the service information;
sensing, using a sensor, a gesture;
processing, using a controller, service content corresponding to the identifier by using the service information in response to determining that the gesture corresponds to the identifier; and
displaying, on a display, the service content.

9. The method of claim 8, wherein the identifier comprises at least one of a text, a sign, and a number.

10. The method of claim 8, wherein the service information comprises at least one of source connecting information that provides advertising related to the identifier, source connection information that provides a coupon service related with the identifier, URL information that connects the identifier to contact information and a mail address.

11. The method of claim 8, wherein the sensing comprises:
photographing the gesture; and
recognizing the gesture by analyzing the photographed gesture.

12. The method of claim 8,
wherein the storing stores a bookmark that relates to and arranges the identifier, and
wherein the processing indicates the bookmark on a display according to a user command.

13. The method of claim 8, wherein the sensing comprises:
receiving the gesture drawn by a user through a touch panel; and
recognizing the gesture drawn on the touch panel.

14. The method of claim 8, wherein the sensing comprises:
receiving the gesture in an audio format; and
recognizing the gesture by analyzing the gesture in the audio format.
